# EUROPEAN PATENT APPLICATION

(11) **EP 2 641 466 A1**
(43) Date of publication of application: **25.09.2013**
(21) Application number: 13275050.6
(22) Date of filing: 07.03.2013
(51) Int. Cl.: A01G 9/02

(54) **Hanging plant baskets**

(30) Priority: 23.03.2012 GB 201205140
(71) Applicant: Bowell, Kenneth William, Evesham Worcestershire WR11 7QS (GB)
(72) Inventor: Bowell, Kenneth William, Evesham Worcestershire WR11 7QS (GB)
(74) Representative: Davies, Elliott

(57) **Abstract**

A hanging basket (1) for plants comprising or including a hollow-walled housing (2) having a water reservoir (4) at its base and apertures (5) in the walls of the housing above the reservoir, a water inlet aperture at the top (3) of the housing and a water outlet aperture in the form of a weir (6) in the reservoir, through the upper end (6a) of which excess water can flow from the reservoir out of the bottom of the basket, and a cowl (7) above and spaced from the upper end of the weir, the cowl preventing or inhibiting water or growing medium from directly entering the weir from above, the arrangement being such that water entering the water inlet aperture can only leave the basket through evaporation via the plants or the growing medium, or by drainage via the weir.

## Description

This invention relates to floral displays for hanging baskets, usually from a bracket extending from a fixed structure such as a wall via three or more chains to impart stability for the basket and help prevent rotation during high winds.

A well known problem with existing baskets of this general type is that they tend to dry out very quickly due, in part, to their necessarily exposed position but also because the plants generally require good drainage and hence much of the water is lost when the basket is watered. Although it is known to use plastic membranes to prevent or inhibit unwanted water drainage, this solution also has the drawback in that the roots of plants can become water logged, and although this disadvantage can be mitigated by perforating the waterproof membrane this again does not help prevent loss by drainage of much of the water intended for the plants.

Where hanging baskets are of the open metal grill type it is common for them to be lined with moss so as to impart a natural look to the basket but this is not an environmentally friendly solution. On the other hand, artificial moss alternatives generally do not provide such a pleasing look as is obtained through the use of natural moss.

A further difficulty arises where the hanging basket has dried out too much in that when re-watered the water tends to drain away quickly through cracks in the growing medium and/or liner material and the only solution to this problem is to water regularly, requiring specially adapted elongate watering equipment or using a watering can whilst standing on step ladders.

A further disadvantage of conventional hanging baskets is that they can generally only be planted from above, and although it is known to arrange for plants to also protrude outwardly from around the rim of the basket, this again brings with it the difficulty of avoiding unwanted water drainage and soil erosion.

The present invention is derived from the realisation that there is a need for an alternative form of planting basket which avoids or obviates the forgoing disadvantages.

According to the invention there is provided a hanging basket for plants comprising or including a hollow-walled housing having a water reservoir at its base and apertures in the walls of the housing above the reservoir, a water inlet aperture at the top of the housing and a water outlet aperture in the form of a weir in the reservoir through the upper end of which excess water can flow from the reservoir out of the bottom of the basket, and a cowl above the upper end of the weir, the cowl preventing or inhibiting water or growing medium from directly entering the weir from above, the arrangement being such that water entering the water inlet aperture can generally only leave the basket through evaporation via the plants or the growing medium, or by drainage via the weir.

With this arrangement substantially all of the water entering the housing can only leave it via the weir which, because it is positioned essentially downstream of the plants and planting material means that they always receive water entering the planting basket from the top and, through the presence of a reservoir below the upper end of the weir there its always a supply of water available to the growing medium and plants.

Advantageously, a water-permeable mat is interposed between the cowl and the growing medium and may provide the growing medium with water from the reservoir by capillary attraction. This arrangement also ensures that the roots of the plants do not become waterlogged, whilst still ensuring that they are allowed free drainage of water into the reservoir.

Conveniently, the housing is circular and the weir is disposed centrally therewithin, being in the form of an open tube with an inlet at the top below the cowl and an outlet outlet the bottom extending through the wall of the reservoir.

Conveniently, the apertures in the wall of the housing are open-ended and frusto-conical, being of shape corresponding to a regular plant pot but having an open end instead of a closed end. This arrangement is particularly convenient because plants for the hanging basket can be grown elsewhere, such as in a greenhouse, and may be used to replace existing plants in the hanging basket by simply removing old ones therefrom and replacing them with fresh plants.

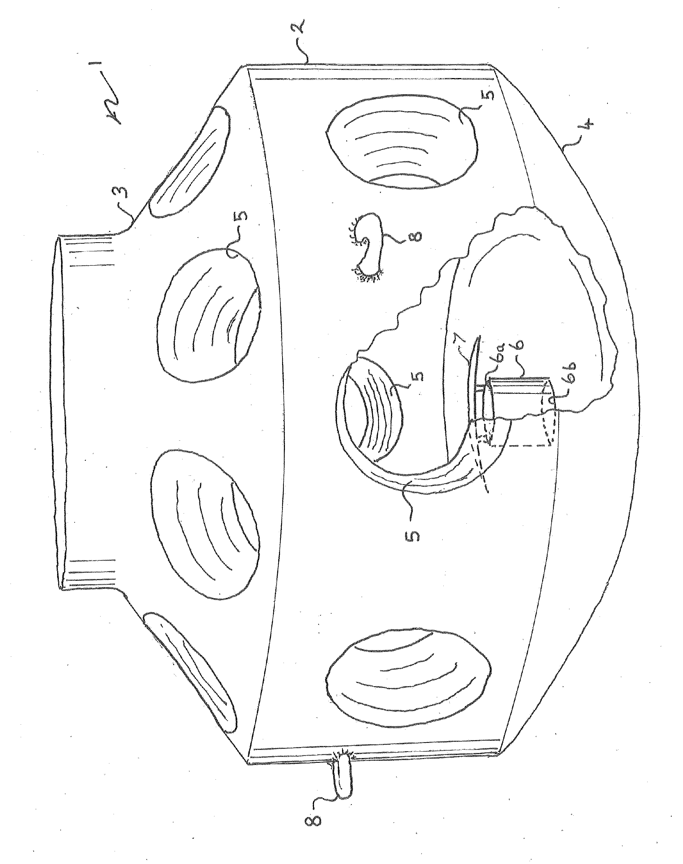

The invention will now be described with reference to the accompanying drawing of a hanging basket shown generally at comprising a generally cylindrical thin-walled housing 2 having a part-conical upper part 3 and a dish-shaped lower part 4 forming a water reservoir. At spaced intervals around the upper and side-walls of the housing 2 are frusto-conical planting apertures 5 for receiving and loosely gripping roots of plants typically grown initially in plant pots (not shown).

Part of the sidewall and lower end of the housing 2 is shown cut-out to reveal a tubular weir 6 in the middle of the dish-shaped reservoir 4, the weir 6 having an open upper end 6a protected from accidental direct drainage of water or loss of growing medium from above by means of a domed cowl 7 fixed immediately above but spaced apart from the weir 6. The lower end 6b of the weir 6 extends through the wall of the reservoir 4 so that water entering the upper end 6a of weir 6 below the cowl 7 can therefore drain away.

The hanging basket can be made to hang by attaching chain or cord to each of three eyelet 8 (only two of which are shown) spaced evenly around the housing 2 and the outside of the housing itself may be provided with a suitable colour, such as green.

In use, the hanging bosket 1 is preferably provided with a water-permeable mat or membrane such as wool, cloth, rockwool or any other suitable material which can also act via capillary attraction like a sponge to both form a barrier for growing medium placed above it to the inside of the reservoir 4, especially around the weir 6 and cowl 7.

Individual plants are then taken from the plant pots and placed into the frusto-conical apertures 5, whereafter the inside of the housing 2 is filled with growing medium and, if preferred, further plants can be inserted into the top, or it can simply be left clear for watering purposes, or partially planted and partially kept clear. Either way, it will be appreciated that water entering the top of the housing 2 can only leave the plant basket 1 via evaporation from the plant medium or transpiration from the plants themselves, or by travelling through the plant medium and into the reservoir surrounding the weir 6, where it stays until it is drawn back into drying plant medium via capillary attraction or evaporation. In the unlikely event that too much water has been placed in the housing 2, either accidentally, deliberately, or due to heavy rain, the presence of the weir allows an escape route for excess water whilst allowing a proportion of the water to be kept in the reservoir. In this way, it has been found that the hanging basket 1 according to the invention requires little maintenance, since no water is wasted, and when plants have to be changed this can be *in situ*, or the basket can be removed and replanted on the ground before being re-hung.

The bosket 1 may be manufactured as a one-piece plastics item, such as by rotational moulding, or it may be made in segments, such as the top part 3 of the housing 2 being separate. The cowl 7 may be integral with the upper end 6a of the tubular weir 6, and the weir itself may comprise holes disposed radially around the top of the weir 6.

## Claims

1. A hanging basket (1) for plants comprising or including a hollow-walled housing (2) having a water reservoir (4) at its base and apertures (5) in the walls of the housing above the reservoir, a water inlet aperture at the top (3) of the housing and a water outlet aperture in the form of a weir (6) in the reservoir, through the upper end (6a) of which excess water can flow from the reservoir out of the bottom of the basket, and a cowl (7) above and spaced from the upper end of the weir, the cowl preventing or inhibiting water or growing medium from directly entering the weir from above, the arrangement being such that water entering the water inlet aperture can only leave the basket through evaporation via the plants or the growing medium, or by drainage via the weir.

2. A hanging basket according to claim 1 **characterised in that** a water-permeable mat is interposed between the cowl (7) and a growing medium when in use.

3. A hanging basket according to claim 1 or claim 2, **characterised in that** the housing (2) is generally circular and the weir (6) is disposed centrally therewithin, being in the form of an open tube with an inlet at the top (6a) below the cowl and an outlet at the bottom (6b) extending through the wall (4) of the reservoir.

4. A hanging basket according to any preceding claim **characterised in that** the apertures (5) in the wall of the housing are open-ended and frusto-conical, being of shape corresponding to a regular plant pot but having an open end instead of a closed end.

5. A hanging basket according to any preceding claim **characterised in that** the cowl (7) is integral with the upper end (6a) of the tubular weir (6).

6. A hanging basket according to any preceding claim **characterised in that** the weir (6) includes holes disposed radially around the top (6a) of the weir below the cowl (7).
